# EUROPEAN PATENT APPLICATION

(11) **EP 3 605 365 A1**
(43) Date of publication of application: **05.02.2020**
(21) Application number: 18808958.5
(22) Date of filing: 19.04.2018
(51) Int. Cl.: G06F 17/30

(54) **SITE SELECTION METHOD AND DEVICE**

(30) Priority: 01.06.2017 CN 201710405595
(71) Applicant: Huawei Technologies Co., Ltd., Longgang District Shenzhen, Guangdong 518129 (CN)
(72) Inventor: ZHANG, Haibin, Shenzhen Guangdong 518129 (CN); JIANG, Fengze, Shenzhen Guangdong 518129 (CN); ZHANG, Xu, Shenzhen Guangdong 518129 (CN)
(74) Representative: Gill Jennings & Every LLP
(86) International application number: PCT/CN2018/083627
(87) International publication number: WO 2018/219057

(57) **Abstract**

A site selection method and device are disclosed, and relate to the field of big data analytics technologies. The method includes: obtaining spatial-temporal feature data of a plurality of users, where the spatial-temporal feature data is used to indicate actual geographical locations of the users at each moment; performing rasterizing processing on spatial-temporal feature data of each user, to convert the spatial-temporal feature data into mapped spatial-temporal feature data; determining a frequent trajectory of each user based on the mapped spatial-temporal feature data of each user; and determining, based on frequent trajectories of the plurality of users, an alternative address for a subject whose site is to be selected. Embodiments of this application provide a solution for selecting a site by extracting frequent trajectories with reference to spatial-temporal feature data of users. The frequent trajectories of the users indicate geographical locations at which the users often appear. Using the frequent trajectories for site selection can reflect a flow of people and identities of surrounding users at each geographical location, and is in accordance with an actual situation that the users are accustomed to performing various daily behaviors and activities at the locations at which the users often appear. This helps improve site selection accuracy.

## Description

This application claims priority to Chinese Patent Application No. 201710405595.2, filed with the Chinese Patent Office on June 1, 2017 and entitled "SITE SELECTION METHOD AND DEVICE", which is incorporated herein by reference in its entirety.

### TECHNICAL FIELD

Embodiments of this application relate to the field of big data analytics technologies, and in particular, to a site selection method and device.

### BACKGROUND

Site selection refers to a process of performing demonstration and decision making on an address before construction. For example, site selection needs to be performed before a building such as a shop, a hotel, a hospital, or a school is established or constructed. A plurality of factors need to be considered during site selection. Site selection for a shop is used as an example. Factors such as a flow of people in an area, a business district, shopping habits of users, the nature of the shop, and a price of surrounding land need to be considered for site selection for the shop.

In the prior art, a method for selecting a site for a shop based on search records of users is provided. A user usually searches, in a map application, for a shop that the user expects to go to. Shop site selection is implemented by obtaining shop search records of a large quantity of users in a map application and analyzing the search records. Site selection for an "xx Coffee Shop" newly planned to be opened is used as an example. First, search records of searching for the "xx Coffee Shop" in a map application by a large quantity of users are obtained. Spatial location distribution, of the users searching for the "xx Coffee Shop", on a map is determined based on the search records. Areas in which a quantity of searching people is greater than a preset threshold are selected as preliminary candidate areas. Then, an area in the vicinity of which the "xx Coffee Shop" has been opened is removed from the preliminary candidate areas, to obtain remaining candidate areas. These remaining candidate areas may be considered as areas with a requirement for opening the "xx Coffee Shop". Afterwards, with further reference to factors such as a flow of people in each remaining candidate area, a price of land surrounding each remaining candidate area, and a business district in which each remaining candidate area is located, a proper remaining candidate area is finally selected as an alternative address for opening the "xx Coffee Shop".

In the foregoing prior art, shop site selection begins from a perspective of a user requirement. A prerequisite is that records of searching for a planned-to-be-opened shop by a large quantity of users in a map application are obtained. If search records are absent due to some reasons, for example, there may be only a few or even no search records about a planned-to-be-opened shop in a map application when the planned-to-be-opened shop is a shop of an emerging type or a less known shop, the solution in the prior art is difficult to implement effectively.

### SUMMARY

Embodiments of this application provide a site selection method and device, to resolve a problem that a solution provided in the prior art is difficult to implement effectively when search records are absent.

According to one aspect, a site selection method is provided. The method includes: obtaining spatial-temporal feature data of a plurality of users, where the spatial-temporal feature data is used to indicate actual geographical locations of the users at each moment; performing rasterizing processing on spatial-temporal feature data of each user, to convert the spatial-temporal feature data into mapped spatial-temporal feature data; determining a frequent trajectory of each user based on the mapped spatial-temporal feature data of each user; and determining, based on frequent trajectories of the plurality of users, an alternative address for a subject whose site is to be selected.

In the solutions provided in the embodiments of this application, a technical solution for selecting a site by extracting frequent trajectories of users with reference to spatial-temporal feature data of the users is provided. This resolves a prior-art problem that exists in site selection depending on search records of users. The spatial-temporal feature data of the users can be conveniently collected from daily activities and behaviors of the users, thereby ensuring that the solution provided in this embodiment of this application can be effectively implemented. In addition, the frequent trajectories of the users indicate geographical locations at which the users often appear. Using the frequent trajectories of the users for site selection can accurately reflect a flow of people and identities of surrounding users at each geographical location, and is in accordance with an actual situation that the users are accustomed to performing various daily behaviors and activities (such as shopping) at the locations at which the users often appear. This helps improve site selection accuracy.

In a possible design, the performing rasterizing processing on spatial-temporal feature data of each user, to convert the spatial-temporal feature data into mapped spatial-temporal feature data includes: for each user, dividing the spatial-temporal feature data of the user by period to obtain spatial-temporal feature data of the user in n periods, where n is an integer greater than 1; for each of the n periods, determining, based on spatial-temporal feature data of the user in the period, an actual geographical location at which the user is located in each of k time segments included in the period, where k is an integer greater than 1; and obtaining a representative geographical location corresponding to the actual geographical location at which the user is located in each time segment, where a spatial area represented by the representative geographical location includes the actual geographical location. The mapped spatial-temporal feature data of each user includes mapped spatial-temporal feature data of the user in the n periods, and mapped spatial-temporal feature data in a period includes a representative geographical location in each time segment included in the period.

In a possible design, the determining a frequent trajectory of each user based on the mapped spatial-temporal feature data of each user includes: for each user, obtaining a sequence corresponding to mapped spatial-temporal feature data of the user in each period, where each element in the sequence indicates a representative geographical location at which the user is located in one time segment; obtaining, based on n sequences corresponding to the user in the n periods, a quantity of times each sub-sequence occurs in the n sequences; and selecting a sub-sequence meeting a first preset condition as a frequent sequence, and determining mapped spatial-temporal feature data corresponding to the frequent sequence, as the frequent trajectory of the user. In a possible design, the first preset condition includes the first or both of the following: a quantity of occurrence times is greater than a first threshold, and a quantity of elements included in a sub-sequence is greater than a second threshold.

In the solution provided in this embodiment of this application, a rasterizing processing result may be used to obtain the frequent trajectory of the user. To be specific, it is identified whether the user often appears around a geographical location in a same time segment of different periods, to help extract the frequent trajectory of the user. If the frequent trajectory of the user is to be directly extracted based on the spatial-temporal feature data without performing rasterizing processing, the frequent trajectory of the user is difficult to obtain, because temporal data and spatial data hardly coincide in actuality.

In a possible design, the determining, based on frequent trajectories of the plurality of users, an alternative address for a subject whose site is to be selected includes: constructing a trajectory label library based on the frequent trajectories of the plurality of users, where the trajectory label library includes trajectory label data of the plurality of users, and trajectory label data of each user includes a user identity and at least one frequent trajectory; and determining, based on the trajectory label library and a second preset condition, the alternative address for the subject whose site is to be selected.

In a possible design, the foregoing method further includes: obtaining location information of the user in a working time segment based on the frequent trajectory of the user; obtaining point of information (POI) information corresponding to the location information; and determining an identity label of the user based on the POI information, where the trajectory label data of the user further includes the identity label of the user.

In the solution provided in this embodiment of this application, identities of users in an area around a geographical location are also considered for site selection, so that an alternative-address recommendation is more refined and more targeted. In addition, using the frequent trajectory of the user to infer the identity label of the user can avoid a problem that a finally determined identity label is inaccurate because identity information entered in social information is incorrect or is not updated in a timely manner, thereby helping improve accuracy of determining the identity label of the user.

According to another aspect, an embodiment of this application provides a site selection device, including a processor and a memory. The memory stores a computer readable program, and the processor runs the program in the memory to implement the site selection method according to the foregoing aspect.

According to still another aspect, an embodiment of this application provides a computer storage medium, configured to store a computer software instruction used by a site selection device. The computer software instruction includes a program designed for executing the foregoing aspect.

According to yet another aspect, an embodiment of this application provides a computer program product. When the computer program product is executed, the computer program product is used to perform the site selection method according to the foregoing aspect.

Compared with that in the prior art, in the solutions provided in the embodiments of this application, the technical solution for selecting a site by extracting frequent trajectories of users with reference to spatial-temporal feature data of the users is provided. The spatial-temporal feature data of the users can be conveniently collected from daily activities and behaviors of the users, thereby ensuring that the solution provided in the embodiments of this application can be effectively implemented. In addition, the frequent trajectories of the users indicate geographical locations at which the users often appear. Using the frequent trajectories of the users for site selection can accurately reflect a flow of people and identities of surrounding users at each geographical location, and is in accordance with an actual situation that the users are accustomed to performing various daily behaviors (such as shopping) at the locations at which the users often appear. This helps improve site selection accuracy.

### DESCRIPTION OF DRAWINGS

FIG. 1 is a flowchart of a site selection method according to an embodiment of this application;
FIG. 2 is a schematic diagram of space rasterizing according to an embodiment of this application;
FIG. 3 is a schematic diagram of a frequent trajectory according to an embodiment of this application;
FIG. 4 is a schematic diagram of composition of a site selection system according to an embodiment of this application;
FIG. 5 is a schematic interaction diagram of a site selection system according to an embodiment of this application;
FIG. 6A is a schematic block diagram of a site selection device according to an embodiment of this application; and
FIG. 6B is a schematic structural diagram of a site selection device according to an embodiment of this application.

### DESCRIPTION OF EMBODIMENTS

To make objectives, technical solutions, and advantages of this application clearer, the following describes the technical solutions in embodiments of this application with reference to the accompanying drawings.

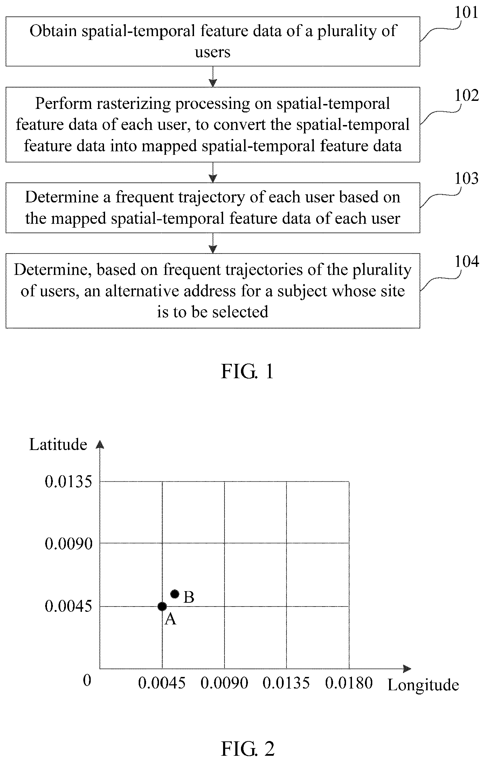

FIG. 1 is a flowchart of a site selection method according to an embodiment of this application. The method may include the following steps.

Step 101: Obtain spatial-temporal feature data of a plurality of users.

The spatial-temporal feature data is used to indicate actual geographical locations of the users at each moment. Spatial-temporal feature data includes data in the following two dimensions: a time dimension and a space dimension. Space-dimension feature data may be represented by longitude and latitude coordinates. Certainly, in another possible implementation, space-dimension feature data may be alternatively represented by a road, an intersection, a landmark, or the like. This is not limited in this embodiment of this application. In short, spatial-temporal feature data can indicate a location of a user and a time at which the user is located at the location.

For example, the spatial-temporal feature data of the plurality of users is shown in Table 1.

**Table 1**

| **User ID** | **Time** | | **Space** | |
|---|---|---|---|---|
| | | | **Longitude** | **Latitude** |
| ID1 | 15-09-2016 | 08:00:00 | 120.3534 | 31.5697 |
| ID1 | 15-09-2016 | 10:10:00 | 120.3591 | 31.5381 |
| ID1 | 15-09-2016 | 11:20:00 | 120.3591 | 31.5381 |
| ID1 | 15-09-2016 | 15:20:00 | 120.3591 | 31.5381 |
| ID2 | 15-09-2016 | 08:05:00 | 120.3634 | 31.5376 |
| ID2 | 15-09-2016 | 09:10:00 | 120.3071 | 31.5888 |
| ID2 | 15-09-2016 | 10:05:00 | 120.3000 | 31.5757 |
| ID2 | 15-09-2016 | 11:15:00 | 120.3001 | 31.5756 |
| ID3 | 15-09-2016 | 08:40:00 | 120.3534 | 31.5697 |
| ... | ... | ... | ... | ... |
| IDn | 15-09-2016 | 23:45:00 | 120.3454 | 31.5578 |

In addition, spatial-temporal feature data of a user may be obtained by using a related location algorithm. For example, the foregoing related location algorithm may be a base station location algorithm, a global positioning system (GPS) location algorithm, or the like. The base station location algorithm is used as an example. Base station location algorithms include a three-base station location algorithm, a multi-base station location algorithm, and the like. A principle of the base station location algorithm is that a terminal measures downlink pilot signals of different base stations to obtain times of arrival (TOA) or time differences of arrival (TDOA) of downlink pilots of the different base stations, and based on a measurement result in combination with coordinates of the base stations, a location of the terminal can be calculated usually by using a trigonometric formula estimation algorithm.

Step 102: Perform rasterizing processing on spatial-temporal feature data of each user, to convert the spatial-temporal feature data into mapped spatial-temporal feature data.

Rasterizing processing means: rasterizing spatial-temporal feature data of a user, so that the spatial-temporal feature data of the user is mapped to a corresponding time segment and a corresponding spatial area. Rasterizing processing includes time-dimension rasterizing processing and space-dimension rasterizing processing. Time-dimension rasterizing processing means: rasterizing time-dimension feature data of a user, so that the time-dimension feature data of the user is mapped to a corresponding time segment. Space-dimension rasterizing processing means: rasterizing space-dimension feature data of a user, so that the space-dimension feature data of the user is mapped to a corresponding spatial area.

Time-dimension rasterizing processing is specifically: segmenting time along a time axis in the time dimension, and mapping time-dimension feature data of a user to a corresponding time segment.

For example, a day is used as a unit, and time of a day is segmented along the time axis. For example, 0 o'clock is used as an origin of the time axis, 30 minutes is used as a time segment (also referred to as a slot), and each day is divided into 48 time segments. Any moment between 08:00:00 and 08:30:00 (including 08:00:00 and excluding 08:30:00) is discretized into a number 16. Time may be alternatively segmented in another manner depending on a requirement. For example, 10 minutes is used as a time segment, or 1 hour is used as a time segment. If a user appears at a plurality of different locations in one time segment, a location at which the user appears for a largest quantity of times may be selected as an actual geographical location of the user in the time segment.

Data obtained by performing time-dimension rasterizing processing on the spatial-temporal feature data of the plurality of users shown in Table 1 is shown in Table 2.

**Table 2**

| **User ID** | **Time** |
|---|---|
| ID1 | 16 |
| ID1 | 20 |
| ID1 | 22 |
| ID1 | 30 |
| ID2 | 16 |
| ID2 | 18 |
| ID2 | 20 |
| ID2 | 22 |
| ID3 | 17 |
| ... | ... |
| IDn | 47 |

Space-dimension rasterizing processing is specifically: using latitude and longitude to divide two-dimensional location space (that is, geographical space) by grid cell, and mapping space-dimension feature data of a user to a corresponding grid cell. A grid cell represents a spatial area.

For example, the two-dimensional location space is divided into grid cells with a length of X meters and a width of Y meters. For example, X=Y=500, that is, the two-dimensional location space is divided into square grid cells with a side length of 500 meters. An actual geographical location of a user at any moment may be located in one of the grid cells. As shown in FIG. 2, an implementation in this embodiment is that longitude and latitude 0:0 represent an origin of coordinates, a longitudinal step (step1) change corresponding to a distance of 500 meters is 0.0045 degrees, and similarly a latitudinal step (step2) change corresponding to a distance of 500 meters is also 0.0045 degrees.

Calculation of space-dimension rasterizing processing may be performed by using the following formulas:
(1) Longitude conversion: Longi=Math.floor(longitude/step1)
(2) Latitude conversion: Lati=Math.floor(latitude/step2)

Math.floor(x) means obtaining a largest integer less than or equal to x, longitude indicates a longitude coordinate before rasterizing processing, latitude indicates a latitude coordinate before rasterizing processing, Longi indicates a longitude coordinate after rasterizing processing, Lati indicates a latitude coordinate after rasterizing processing, step1 indicates a longitudinal step, and step2 indicates a latitudinal step.

According to FIG. 2, longitude increases by 0.0045 for every 500-meter rightward extension, and latitude increases by 0.0045 for every 500-meter upward extension. For a point A in a grid cell, it is assumed that original longitude and latitude coordinates of the point A are (0.0045, 0.0045). Based on the longitude and latitude conversion formulas Longi=Math.floor(0.0045/0.0045) and Lati=Math.floor(0.0045/0.0045), longitude and latitude coordinates after rasterizing processing are (1, 1). For another point B in a grid cell, original longitude and latitude coordinates of the point B are (0.0055, 0.0055). Based on the longitude and latitude conversion formulas Longi=Math.floor(0.0055/0.0045) and Lati=Math.floor(0.0055/0.0045), longitude and latitude coordinates after rasterizing processing are (1, 1). The point A and the point B obtained through rasterizing processing are located in a same grid cell represented by (1, 1).

Data obtained by performing time-dimension rasterizing processing and space-dimension rasterizing processing on the spatial-temporal feature data of the plurality of users shown in Table 1 is shown in Table 3.

**Table 3**

| **User ID** | **Time** | **Space (Longitude, Latitude)** |
|---|---|---|
| ID1 | 16 | 26745, 7015 |
| ID1 | 20 | 26746, 7008 |
| ID1 | 22 | 26746, 7008 |
| ID1 | 30 | 26746, 7008 |
| ID2 | 16 | 26747, 7008 |
| ID2 | 18 | 26734, 7019 |
| ID2 | 20 | 26733, 7016 |
| ID2 | 22 | 26733, 7016 |
| ID3 | 17 | 26745, 7015 |
| ... | ... | ... |
| IDn | 47 | 26743, 7012 |

Table 4 shows a format of original spatial-temporal feature data and a format of mapped spatial-temporal feature data that is obtained through rasterizing processing.

**Table 4**

| **Format of original spatial-temporal feature data: (User identity, time, longitude coordinate, latitude coordinate)** | **Format of mapped spatial-temporal feature data after rasterizing processing: (User identity, time segment (slot) after conversion, longitude coordinate after rasterizing, latitude coordinate after rasterizing)** |
|---|---|
| (ID1, 08:00:00 15-09-2016, 120.3534, 31.5697) | (ID1, 16, 26745, 7015) |
| (ID1, 10:10:00 15-09-2016, 120.3591, 31.5381) | (ID1, 20, 26746, 7008) |
| ... | ... |

In an example, step 102 includes the following substeps.

Step 102a: For each user, divide the spatial-temporal feature data of the user by period to obtain spatial-temporal feature data of the user in n periods, where n is an integer greater than 1.

Optionally, the foregoing period is usually one day. This is more consistent with daily activity regularity of a user. Certainly, period division may be alternatively implemented in another manner depending on a requirement, for example, the period may be half a day or one week.

Step 102b: For each of the n periods, determine, based on spatial-temporal feature data of the user in the period, an actual geographical location at which the user is located in each of k time segments included in the period, where k is an integer greater than 1.

For example, one day is used as a period, and 30 minutes is used as a time segment. In this case, a period includes 48 time segments.

Optionally, for each period, spatial-temporal feature data of the user in each of the k time segments included in the period is obtained; and for each time segment, when the spatial-temporal feature data of the user in the time segment indicates a same actual geographical location, the same actual geographical location is determined as the actual geographical location at which the user is located in the time segment; or when the spatial-temporal feature data of the user in the time segment indicates a plurality of different actual geographical locations, an actual geographical location that is indicated for a largest quantity of times is determined as the actual geographical location at which the user is located in the time segment.

For example, if a user has five spatial-temporal feature data records in a time segment, and actual geographical locations indicated by the five spatial-temporal feature data records are the same and are all represented by longitude and latitude coordinates A, an actual geographical location of the user in the time segment is represented by the longitude and latitude coordinates A. For another example, if a user has five spatial-temporal feature data records in a time segment, actual geographical locations indicated by three of the spatial-temporal feature data records are represented by longitude and latitude coordinates B, and actual geographical locations indicated by the other two spatial-temporal feature data records are respectively represented by longitude and latitude coordinates A and longitude and latitude coordinates C. In this case, an actual geographical location of the user in the time segment is represented by the longitude and latitude coordinates B.

Step 102c: Obtain a representative geographical location corresponding to the actual geographical location at which the user is located in each time segment, where a spatial area represented by the representative geographical location includes the actual geographical location.

Optionally, for each time segment, a longitude coordinate of the actual geographical location at which the user is located in the time segment is divided by a first preset value, and a quotient is rounded off (for example, rounded down to a nearest integer), to obtain a longitude coordinate of the representative geographical location of the user in the time segment; and a latitude coordinate of the actual geographical location at which the user is located in the time segment is divided by a second preset value, and a quotient is rounded off (for example, rounded down to a nearest integer), to obtain a latitude coordinate of the representative geographical location of the user in the time segment. The first preset value and the second preset value may be the same or may be different. Values of the first preset value and the second preset value may be set based on a grid division granularity. For example, when two-dimensional location space is divided into square grid cells with a side length of 500 meters, the first preset value and the second preset value are the same, and the values are both 0.0045. In actual application, the values of the first preset value and the second preset value need to be set properly. If the values of the first preset value and the second preset value are excessively large, the grid division granularity is excessively large as a result, affecting accuracy of subsequent site selection. If the values of the first preset value and the second preset value are excessively small, the grid division granularity is excessively small as a result, making it difficult to extract a frequent trajectory.

In this case, the mapped spatial-temporal feature data of each user includes mapped spatial-temporal feature data of the user in the n periods, and mapped spatial-temporal feature data in a period includes a representative geographical location in each time segment included in the period.

Step 103: Determine a frequent trajectory of each user based on the mapped spatial-temporal feature data of each user.

For each user, the mapped spatial-temporal feature data of the user in the plurality of periods is accumulated to determine the frequent trajectory of the user. The frequent trajectory is used to indicate a geographical location at which the user often appears (for example, a quantity of appearance times is greater than a preset threshold) in a same time segment of the plurality of periods.

In an example, step 103 includes the following substeps.

Step 103a: For each user, obtain a sequence corresponding to mapped spatial-temporal feature data of the user in each period, where each element in the sequence indicates a representative geographical location at which the user is located in one time segment.

For example, each element in the sequence may be represented as "a time segment: a representative geographical location", where the time segment is a time segment after rasterizing processing, and the representative geographical location is longitude and latitude coordinates after rasterizing processing. For example, "16:(26745, 7015)" indicates that the user appears at a location (26745, 7015) in a time segment 16.

Optionally, for each user, a sequence corresponding to mapped spatial-temporal feature data of the user in target time segments of each period is obtained. The target time segments include a plurality of time segments, and the plurality of time segments may be consecutive or may be inconsecutive. Optionally, the target time segments are non-sleeping time segments, for example, from 7 o'clock in the morning to 10 o'clock in the evening. For example, one day is used as a period, and 30 minutes is used as a time segment. A sequence corresponding to mapped spatial-temporal feature data of a user in non-sleeping time segments of a day is as follows:
14:A→15:B→16:B→17:B→18:C→19:C→20:C→21:C→22:C→23:C→24:C→25:D→26:C →27:C→28:C→29:C→30:C→31:C→32:C→33:C→34:C→35:C→36:C→37:B→38:B→39: A→40:A→41:E→42:A→43:A→44:A.

Step 103b: Obtain, based on n sequences corresponding to the user in the n periods, a quantity of times each sub-sequence occurs in the n sequences.

A sub-sequence is a sequence that is formed by any element in a sequence or a combination of a plurality of elements in a sequence.

Step 103c: Select a sub-sequence meeting a first preset condition as a frequent sequence, and determine mapped spatial-temporal feature data corresponding to the frequent sequence, as the frequent trajectory of the user.

The first preset condition includes the first or both of the following: a quantity of occurrence times is greater than a first threshold, and a quantity of elements included in a sub-sequence is greater than a second threshold. The first threshold and the second threshold are empirical values that are preset based on an actual situation.

Optionally, a PrefixSpan (Prefix-Projected Pattern Growth) algorithm is used to extract a frequent sequence. It is assumed that there are the following three sequences: <a b c>, <a b>, and <a c>. These sequences may be considered as three sequences corresponding to a user in three different periods. The three sequences include the following sub-sequences: <a>, <b>, <c>, <a b>, <b c>, <a c>, and <a b c>, where a quantity of occurrence times of <a> is 3, a quantity of occurrence times of <b> is 2, a quantity of occurrence times of <c> is 2, a quantity of occurrence times of <a b> is 2, a quantity of occurrence times of <b c> is 1, a quantity of occurrence times of <a c> is 2, and a quantity of occurrence times of <a b c> is 1.

The PrefixSpan algorithm requires an input parameter that is referred to as a degree of support. A value of the degree of support ranges between 0 and 1 (excluding 0 and 1). A product of the degree of support and a total quantity of sequences is equal to a minimum threshold of a quantity of occurrence times of a frequent sequence. For example, in the foregoing example, the total quantity of sequences is 3. If the degree of support is 0.5, it means that sub-sequences that occur for 3x0.5=1.5≈2 times and more than 2 times are considered as frequent sequences. That is, the frequent sequences include <a>, <b>, <c>, <a b>, and <a c>.

When the PrefixSpan algorithm is applied in this embodiment of this application to mine a frequent trajectory, the sequence elements a, b, and c in the foregoing example may be considered as representative geographical locations at which the user is located in a time segment. For example, a may be "16:(26745, 7015)", b may be "20:(26746, 7008)", and c may be "22:(26746, 7008)". For example, one day is used as a period. In this case, the following result may be obtained: The user appears at a location (26745, 7015) in a time segment 16 in three days, appears at a location (26746, 7008) in a time segment 20 in two days, appears at the location (26746, 7008) in a time segment 22 in two days, appears at the location (26745, 7015) in the time segment 16 and the location (26746, 7008) in the time segment 20 in two days, and the like.

In an example, a sub-sequence that occurs for more than 10 times and that includes more than 15 elements is selected as a frequent sequence. In this embodiment of this application, a minimum value of a quantity of elements in a frequent sequence is limited, to prevent selected frequent sequences from being excessively scattered, thereby better reflecting a relatively complete daily activity path of a user.

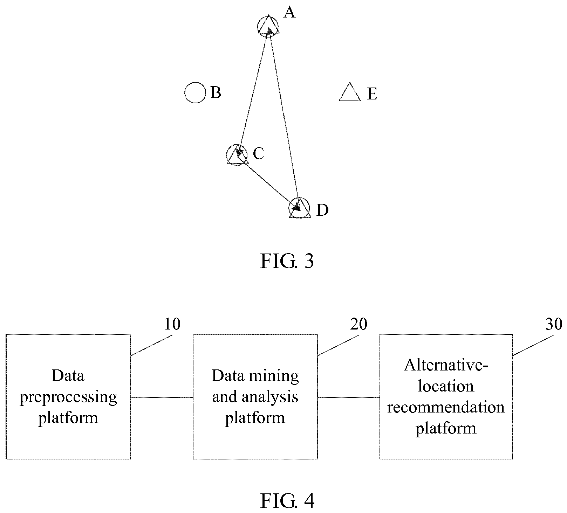

FIG. 3 is a simple schematic diagram of a frequent trajectory. Locations (including four locations: A, B, C, and D) that a user passes by on a first day are indicated by circles, and locations (including four locations: A, C, D, and E) that the user passes by on a second day are indicated by triangles. In this case, a frequent trajectory of the user within the two days may include three locations: A, C, and D.

In this embodiment of this application, the frequent trajectory of the user may be obtained by using a rasterizing processing result. To be specific, it is identified whether the user often appears around a geographical location in a same time segment of different periods, to help extract the frequent trajectory of the user. As shown in Table 5, a user 1 has different spatial-temporal feature data, but mapped spatial-temporal feature data obtained through rasterizing processing is the same. If rasterizing processing is not performed, that is, a frequent trajectory of the user 1 is to be directly extracted based on the spatial-temporal feature data in a left part of Table 5, the frequent trajectory of the user is difficult to obtain, because temporal data and spatial data hardly coincide in actuality.

**Table 5**

| **Original spatial-temporal feature data** | **Mapped spatial-temporal feature data after rasterizing processing** |
|---|---|
| (ID1, 08:00:00 15-09-2016, 120.3534, 31.5697) | (ID1, 16, 26745, 7015) |
| (ID1, 08:06:10 15-09-2016, 120.3534, 31.5696) | (ID1, 16, 26745, 7015) |
| (ID1, 08:05:28 16-09-2016, 120.3535, 31.5695) | (ID1, 16, 26745, 7015) |

In addition, in this embodiment of this application, using the PrefixSpan algorithm for frequent-trajectory mining is used as an example. In another possible implementation, an algorithm for obtaining a longest common substring or another algorithm may be alternatively used for frequent-trajectory mining.

Step 104: Determine, based on frequent trajectories of the plurality of users, an alternative address for a subject whose site is to be selected.

A frequent trajectory of a user indicates a geographical location at which the user often appears. Frequent trajectories of a large quantity of users reflect a flow of people at each geographical location, and the flow of people is a relatively fixed flow of people on each day, rather than a burst of a flow of people on a particular day.

The subject whose site is to be selected may be a building such as a shop, a hotel, a shopping mall, an amusement park, or a stadium. This is not limited in this embodiment of this application. Optionally, the technical solution provided in this embodiment of this application is more applicable to site selection for a building with nature of commercial profitability, such as a shop.

When the alternative address is being determined for the subject whose site is to be selected, factors such as a flow of people at each geographical location, identities of users that the subject whose site is to be selected is targeted at, nature of the subject whose site is to be selected, and a price of surrounding land may be comprehensively considered.

In an example, step 104 includes the following substeps.

Step 104a: Construct a trajectory label library based on the frequent trajectories of the plurality of users.

The trajectory label library includes trajectory label data of the plurality of users. Trajectory label data of each user includes a user identity and at least one frequent trajectory. Optionally, the trajectory label data of each user further includes a quantity of occurrence times corresponding to each frequent trajectory. For example, one day is used as a period, and in this case, the quantity of occurrence times corresponding to each frequent trajectory is a quantity of days with the frequent trajectory.

For example, the trajectory label library is shown in Table 6.

**Table 6**

| **User ID** | **Frequent trajectory** | **Quantity of days with the frequent trajectory** |
|---|---|---|
| ID1 | 14:A→15:B→16:B→17:B→18:C→19:C→...→ 34:D→35:A | 20 |
| | 12:E→13:F→14:A→35:A→36:A→37:G→38:A | 8 |
| | ... | ... |
| ID2 | 14:H→15:B→16:B→17:B→18:C→19:C→...→ 34:D→35:H | 15 |
| | 14:H→15:H→16:B→17:B→18:C→19:C→...→ 34:D→35:H | 7 |
| | ... | ... |
| ... | ... | ... |

Optionally, the trajectory label data of each user further includes an identity label of the user.

In a possible implementation, the following manner is used to obtain the identity label of the user: Location information of the user in a working time segment is obtained based on the frequent trajectory of the user, POI information corresponding to the location information is obtained, and the identity label of the user is determined based on the POI information. A working time segment is a working time segment on a workday, for example, from 9 o'clock in the morning to 5 o'clock in the afternoon from every Monday to Friday. The location information of the user in the working time segment is used to indicate a geographical location at which the user is located in the working time segment. In an example, it is assumed that a geographical location at which a user 1 is located in a working time segment is represented by longitude and latitude coordinates A, and POI information corresponding to the longitude and latitude coordinates A is an xx office building. In this case, it may be determined that an identity label of the user 1 is a white collar worker. In another example, it is assumed that a geographical location at which a user 2 is located in a working time segment is represented by longitude and latitude coordinates B, and POI information corresponding to the longitude and latitude coordinates B is an xx hospital. In this case, it may be determined that an identity label of the user 2 is a medical worker. In the foregoing manner, the identity label of the user can be inferred with reference to the frequent trajectory of the user.

In another possible implementation, alternatively, social information of the user may be obtained, and the identity label of the user may be extracted from the social information of the user. Using the frequent trajectory of the user to infer the identity label of the user can avoid a problem that a finally determined identity label is inaccurate because identity information entered in the social information is incorrect or is not updated in a timely manner, thereby helping improve accuracy of determining the identity label of the user.

Step 104b: Determine, based on the trajectory label library and a second preset condition, the alternative address for the subject whose site is to be selected.

The second preset condition may be set by comprehensively considering factors, such as a flow of people, identities of users that the subject whose site is to be selected is targeted at, nature of the subject whose site is to be selected, and a price of surrounding land. For example, the second preset condition includes at least one of the following: a flow of people in an area around a geographical location in a time segment is greater than a preset threshold, a proportion of users with an identity label of white collar worker in the area around the geographical location is greater than a preset proportion, no large business district exists in the area around the geographical location, a land price in the area around the geographical location is less than a preset price, and the like. In actual application, the second preset condition may be flexibly set depending on an actual site selection requirement. This is not limited in this embodiment of this application.

In addition, a flow of people at a geographical location in a time segment may be obtained through estimation based on frequent trajectories of a plurality of users. For example, a flow of people at a geographical location A from 7 o'clock in the morning to 9 o'clock in the morning may be obtained through estimation in the following manner: Frequent trajectories of all users are searched for target frequent trajectories passing by the geographical location A from 7 o'clock in the morning to 9 o'clock in the morning, and a quantity of the target frequent trajectories is used as the flow of people at the geographical location A from 7 o'clock in the morning to 9 o'clock in the morning.

In the solutions provided in the embodiments of this application, the technical solution for selecting a site by extracting frequent trajectories of users with reference to spatial-temporal feature data of the users is provided. This resolves a prior-art problem that exists in site selection depending on search records of users. The spatial-temporal feature data of the users can be conveniently collected from daily activities and behaviors of the users, thereby ensuring that the solution provided in this embodiment of this application can be effectively implemented.

In addition, the frequent trajectories of the users indicate geographical locations at which the users often appear. Using the frequent trajectories of the users for site selection can accurately reflect a flow of people and identities of surrounding users at each geographical location, and is in accordance with an actual situation that the users are accustomed to performing various daily behaviors and activities (such as shopping) at the locations at which the users often appear. This helps improve site selection accuracy.

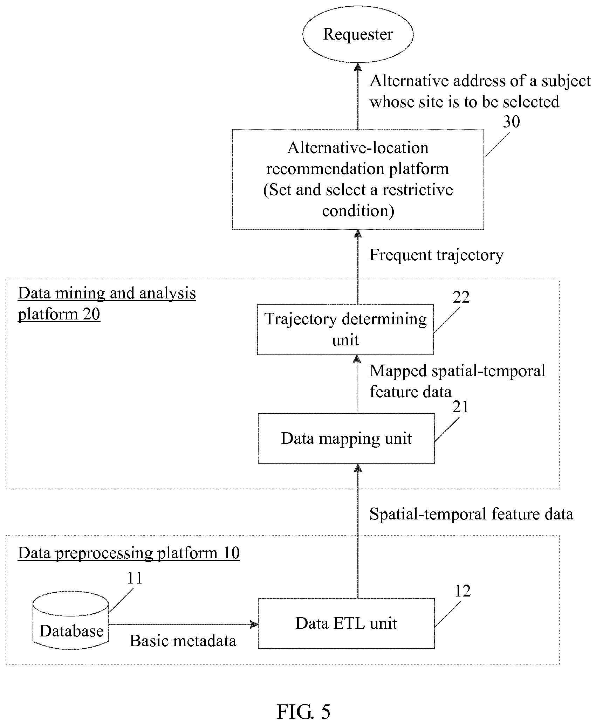

FIG. 4 is a schematic diagram of composition of a site selection system according to an embodiment of this application. The site selection system may include a data preprocessing platform 10, a data mining and analysis platform 20, and an alternative-location recommendation platform 30. FIG. 5 is a schematic diagram of interaction between constituent parts of the system when the site selection system shown in FIG. 4 is used for site selection.

The data preprocessing platform 10 is configured to preprocess collected basic metadata to obtain spatial-temporal feature data of a plurality of users. The basic metadata is recorded data that can indicate locations of the users and times at which the users are located at the locations.

Optionally, the data preprocessing platform 10 includes a database 11 and a data ETL (Extract-Transform-Load, extract, transform, and load) unit 12.

The database 11 stores the basic metadata. Optionally, the basic metadata is stored in tabular form. The database 11 may store a plurality of basic metadata tables. In an example, longitude and latitude coordinates of a base station are used to approximately indicate an actual geographical location of a user. A terminal (for example, a mobile phone) used by the user sends a signal to the base station that provides a service for the user. The base station may record a time at which the signal of the terminal is received and a device identity of the terminal. For example, a basic metadata table of the base station records correspondences between device identities of at least one group of terminals and times. An example thereof is shown in Table 7.

**Table 7**

| | | |
|---|---|---|
| **Base station 1 (Longitude and latitude coordinates: 120.3534,31.5697)** | **Device identity** | **Time at which a signal of a terminal is received** |
| | Identity 1 | 08:00:00 15-09-2016 |
| | Identity 2 | 08:05:00 15-09-2016 |
| | Identity 3 | 08:40:00 15-09-2016 |
| | Identity 1 | 10:10:00 15-09-2016 |
| | ... | ... |

The data ETL unit 12 extracts the basic metadata from the database 11, summaries and converts the basic metadata to obtain the spatial-temporal feature data of the users, and then transmits the spatial-temporal feature data of the users to the data mining and analysis platform 20.

With reference to the foregoing example, the data ETL unit 12 may consider each terminal as a user, and allocate a corresponding user ID to the terminal. For each user, the data ETL module 12 extracts a time and longitude and latitude coordinates of a corresponding base station from a basic metadata table of each base station, and performs consolidation to obtain spatial-temporal feature data of the user. The spatial-temporal feature data of the user may be shown in Table 1.

The data mining and analysis platform 20 provides units that have functions such as feature transformation and data mining.

Optionally, in this embodiment of this application, the data mining and analysis platform 20 includes a data mapping unit 21 and a trajectory determining unit 22. The data mapping unit 21 is configured to perform rasterizing processing on spatial-temporal feature data of each user, to convert the spatial-temporal feature data into mapped spatial-temporal feature data. The trajectory determining unit 22 is configured to determine a frequent trajectory of each user based on the mapped spatial-temporal feature data of each user. For specific processes about the foregoing feature data mapping and frequent-trajectory mining, refer to descriptions in the embodiment in FIG. 1. Details are not described in this

### embodiment again.

After obtaining frequent trajectories of the plurality of users, the data mining and analysis platform 20 provides the frequent trajectories of the plurality of users for the alternative-location recommendation platform 30.

The alternative-location recommendation platform 30 is configured to determine, based on the frequent trajectories of the plurality of users, an alternative address for a subject whose site is to be selected, and then provide, for a requester (for example, a merchant), the alternative address of the subject whose site is to be selected. Optionally, the alternative-location recommendation platform 30 provides restrictive-condition (that is, the foregoing described second preset condition) setting and selection functions for the requester. The requester sets and selects a proper restrictive condition, so that the alternative-location recommendation platform 30 selects a proper alternative address. For a specific process about determining the alternative address for the subject whose site is to be selected, refer to descriptions in the embodiment in FIG. 1. Details are not described in this embodiment again.

It should be noted that, for the platforms in the site selection system shown in FIG. 4, each platform may be implemented by one or more servers, or functions of a plurality of platforms may be integrated into one server.

In the foregoing method embodiment, the technical solution provided in this application is described from a perspective of a site selection device. It can be understood that, to implement the foregoing functions, the site selection device includes corresponding hardware structures and/or software modules (or units) for performing the functions. Units and algorithm steps in the examples described with reference to the embodiments disclosed in this application can be implemented by hardware or a combination of hardware and computer software in the embodiments of this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the technical solutions in the embodiments of this application.

In the embodiments of this application, functional-unit division may be performed on the site selection device based on the example of the method. For example, functional units may be divided based on corresponding functions, or two or more functions may be integrated into one processing unit. The integrated unit may be implemented in a form of hardware, or may be implemented in a form of a software functional unit. It should be noted that unit division in the embodiments of this application is an example, and is merely logical function division. In actual implementation, another division manner may be used.

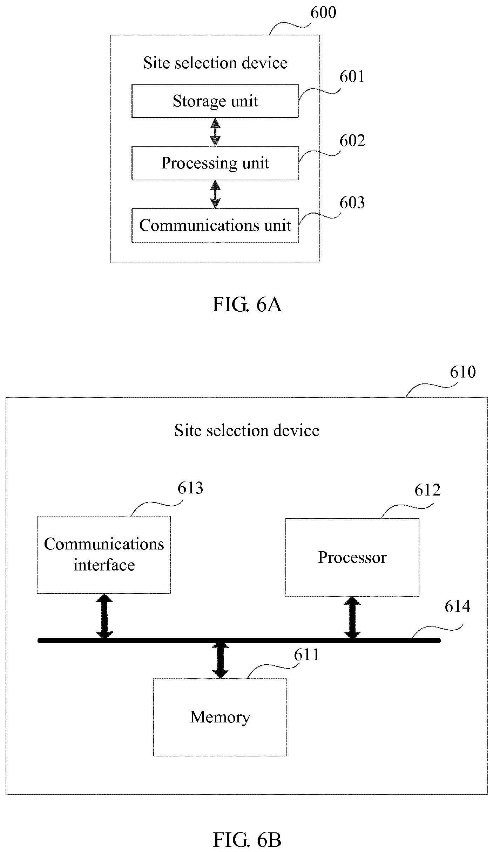

If the integrated unit is used, FIG. 6A is a possible schematic structural diagram of the site selection device according to the foregoing embodiments. A site selection device 600 includes a processing unit 602 and a communications unit 603. The processing unit 602 is configured to control and manage an action of the site selection device 600. For example, the processing unit 602 is configured to support the site selection device 600 in performing step 101 to step 104 in FIG. 1, and/or is configured to perform another step of the technology described in this specification. The communications unit 603 is configured to support the site selection device 600 in communicating with another device. The site selection device 600 may further include a storage unit 601, configured to store program code and data of the site selection device 600.

The processing unit 602 may be a processor or a controller, such as a central processing unit (CPU), a general purpose processor, a digital signal processor (DSP), an application-specific integrated circuit (ASIC), a field programmable gate array (FPGA) or another programmable logic device, a transistor logic device, a hardware component, or any combination thereof. The processor or the controller may implement or execute various example logical blocks, modules, and circuits described with reference to content disclosed in this application. Alternatively, the processor may be a combination for implementing a computing function, for example, a combination including one or more microprocessors, or a combination of a DSP and a microprocessor. The communications unit 603 may be a communications interface, a transceiver, a transceiver circuit, or the like. The communications interface is a general term, and may include one or more interfaces, for example, an interface between the site selection device and another device. The storage unit 601 may be a memory.

When the processing unit 602 is a processor, the communications unit 603 is a communications interface, and the storage unit 601 is a memory, the site selection device in the embodiments of this application may be a site selection device shown in FIG. 6B.

As shown in FIG. 6B, the site selection device 610 includes a processor 612, a communications interface 613, and a memory 611. Optionally, the site selection device 610 may further include a bus 614. The communications interface 613, the processor 612, and the memory 611 may be connected to each other by using the bus 614. The bus 614 may be a Peripheral Component Interconnect (PCI for short) bus, an Extended Industry Standard Architecture (EISA for short) bus, or the like. The bus 614 may be classified into an address bus, a data bus, a control bus, and the like. For ease of representation, only one thick line is used to represent the bus in FIG. 6B, but this does not mean that there is only one bus or only one type of bus.

Methods or algorithm steps described with reference to content disclosed in the embodiments of this application may be implemented by hardware, or may be implemented by executing a software instruction by a processor. The software instruction may include a corresponding software module (or unit). The software module (or unit) may be stored in a random access memory (RAM), a flash memory, a read-only memory (ROM), an erasable programmable read only memory (EPROM), an electrically erasable programmable read only memory (EEPROM), a register, a hard disk, a removable hard disk, a compact disc read-only memory (CD-ROM), or any other form of storage medium well known in the art. For example, the storage medium is coupled to the processor, so that the processor can read information from the storage medium or write information into the storage medium. Certainly, the storage medium may alternatively be a constituent part of the processor. The processor and the storage medium may be located in an ASIC. In addition, the ASIC may be located in the site selection device. Certainly, the processor and the storage medium may alternatively exist in the site selection device as discrete components.

A person skilled in the art should be aware that in the foregoing one or more examples, the functions described in the embodiments of this application may be implemented by hardware, software, firmware, or any combination thereof. The embodiments of this application further provide a computer program product. When the computer program product is executed, the computer program product is used to implement the foregoing functions. Moreover, the foregoing computer program may be stored in a computer readable medium or be transmitted as one or more instructions or code on the computer readable medium. The computer readable medium includes a computer storage medium and a communications medium. The communications medium includes any medium that enables a computer program to be transmitted from one place to another place. The storage medium may be any usable medium accessible to a general-purpose or special-purpose computer.

In the foregoing specific implementations, the objectives, technical solutions, and beneficial effects of the embodiments of this application are further described in detail. It should be understood that the foregoing descriptions are merely specific implementations of the embodiments of this application, but are not intended to limit the protection scope of the embodiments of this application. Any modification, equivalent replacement, or improvement made based on the technical solutions in the embodiments of this application shall fall within the protection scope of the embodiments of this application.

## Claims

1. A site selection method, wherein the method comprises:
obtaining spatial-temporal feature data of a plurality of users, wherein the spatial-temporal feature data is used to indicate actual geographical locations of the users at each moment;
performing rasterizing processing on spatial-temporal feature data of each user, to convert the spatial-temporal feature data into mapped spatial-temporal feature data;
determining a frequent trajectory of each user based on the mapped spatial-temporal feature data of each user; and
determining, based on frequent trajectories of the plurality of users, an alternative address for a subject whose site is to be selected.

2. The method according to claim 1, wherein the performing rasterizing processing on spatial-temporal feature data of each user, to convert the spatial-temporal feature data into mapped spatial-temporal feature data comprises:
for each user, dividing the spatial-temporal feature data of the user by period to obtain spatial-temporal feature data of the user in n periods, wherein n is an integer greater than 1;
for each of the n periods, determining, based on spatial-temporal feature data of the user in the period, an actual geographical location at which the user is located in each of k time segments comprised in the period, wherein k is an integer greater than 1; and
obtaining a representative geographical location corresponding to the actual geographical location at which the user is located in each time segment, wherein a spatial area represented by the representative geographical location comprises the actual geographical location; wherein
the mapped spatial-temporal feature data of each user comprises mapped spatial-temporal feature data of the user in the n periods, and mapped spatial-temporal feature data in a period comprises a representative geographical location in each time segment comprised in the period.

3. The method according to claim 2, wherein the obtaining a representative geographical location corresponding to the actual geographical location at which the user is located in each time segment comprises:
for each time segment, dividing, by a first preset value, a longitude coordinate of the actual geographical location at which the user is located in the time segment, and rounding off a quotient, to obtain a longitude coordinate of the representative geographical location of the user in the time segment; and
dividing, by a second preset value, a latitude coordinate of the actual geographical location at which the user is located in the time segment, and rounding off a quotient, to obtain a latitude coordinate of the representative geographical location of the user in the time segment.

4. The method according to claim 2, wherein the determining, based on spatial-temporal feature data of the user in the period, an actual geographical location at which the user is located in each of k time segments comprised in the period comprises:
obtaining spatial-temporal feature data of the user in each of the k time segments comprised in the period; and
for each time segment, when the spatial-temporal feature data of the user in the time segment indicates a same actual geographical location, determining the same actual geographical location as the actual geographical location at which the user is located in the time segment; or when the spatial-temporal feature data of the user in the time segment indicates a plurality of different actual geographical locations, determining an actual geographical location that is indicated for a largest quantity of times as the actual geographical location at which the user is located in the time segment.

5. The method according to claim 2, wherein the determining a frequent trajectory of each user based on the mapped spatial-temporal feature data of each user comprises:
for each user, obtaining a sequence corresponding to mapped spatial-temporal feature data of the user in each period, wherein each element in the sequence indicates a representative geographical location at which the user is located in one time segment;
obtaining, based on n sequences corresponding to the user in the n periods, a quantity of times each sub-sequence occurs in the n sequences; and
selecting a sub-sequence meeting a first preset condition as a frequent sequence, and determining mapped spatial-temporal feature data corresponding to the frequent sequence, as the frequent trajectory of the user, wherein the first preset condition comprises the first or both of the following: a quantity of occurrence times is greater than a first threshold, and a quantity of elements comprised in a sub-sequence is greater than a second threshold.

6. The method according to any one of claims 1 to 5, wherein the determining, based on frequent trajectories of the plurality of users, an alternative address for a subject whose site is to be selected comprises:
constructing a trajectory label library based on the frequent trajectories of the plurality of users, wherein the trajectory label library comprises trajectory label data of the plurality of users, and trajectory label data of each user comprises a user identity and at least one frequent trajectory; and
determining, based on the trajectory label library and a second preset condition, the alternative address for the subject whose site is to be selected.

7. The method according to claim 6, wherein the method further comprises:
obtaining location information of the user in a working time segment based on the frequent trajectory of the user;
obtaining point of information POI information corresponding to the location information; and
determining an identity label of the user based on the POI information, wherein the trajectory label data of the user further comprises the identity label of the user.

8. A site selection device, wherein the device comprises:
a data obtaining unit, configured to obtain spatial-temporal feature data of a plurality of users, wherein the spatial-temporal feature data is used to indicate actual geographical locations of the users at each moment;
a data mapping unit, configured to perform rasterizing processing on spatial-temporal feature data of each user, to convert the spatial-temporal feature data into mapped spatial-temporal feature data;
a trajectory determining unit, configured to determine a frequent trajectory of each user based on the mapped spatial-temporal feature data of each user; and
an address determining unit, configured to determine, based on frequent trajectories of the plurality of users, an alternative address for a subject whose site is to be selected.

9. The device according to claim 8, wherein the data mapping unit is configured to:
for each user, divide the spatial-temporal feature data of the user by period to obtain spatial-temporal feature data of the user in n periods, wherein n is an integer greater than 1;
for each of the n periods, determine, based on spatial-temporal feature data of the user in the period, an actual geographical location at which the user is located in each of k time segments comprised in the period, wherein k is an integer greater than 1; and
obtain a representative geographical location corresponding to the actual geographical location at which the user is located in each time segment, wherein a spatial area represented by the representative geographical location comprises the actual geographical location; wherein
the mapped spatial-temporal feature data of each user comprises mapped spatial-temporal feature data of the user in the n periods, and mapped spatial-temporal feature data in a period comprises a representative geographical location in each time segment comprised in the period.

10. The device according to claim 9, wherein the data mapping unit is configured to:
for each time segment, divide, by a first preset value, a longitude coordinate of the actual geographical location at which the user is located in the time segment, and round off a quotient, to obtain a longitude coordinate of the representative geographical location of the user in the time segment; and
divide, by a second preset value, a latitude coordinate of the actual geographical location at which the user is located in the time segment, and round off a quotient, to obtain a latitude coordinate of the representative geographical location of the user in the time segment.

11. The device according to claim 9, wherein the data mapping unit is configured to:
obtain spatial-temporal feature data of the user in each of the k time segments comprised in the period; and
for each time segment, when the spatial-temporal feature data of the user in the time segment indicates a same actual geographical location, determine the same actual geographical location as the actual geographical location at which the user is located in the time segment; or when the spatial-temporal feature data of the user in the time segment indicates a plurality of different actual geographical locations, determine an actual geographical location that is indicated for a largest quantity of times as the actual geographical location at which the user is located in the time segment.

12. The device according to claim 9, wherein the trajectory determining unit is configured to:
for each user, obtain a sequence corresponding to mapped spatial-temporal feature data of the user in each period, wherein each element in the sequence indicates a representative geographical location at which the user is located in one time segment;
obtain, based on n sequences corresponding to the user in the n periods, a quantity of times each sub-sequence occurs in the n sequences; and
select a sub-sequence meeting a first preset condition as a frequent sequence, and determine mapped spatial-temporal feature data corresponding to the frequent sequence, as the frequent trajectory of the user, wherein the first preset condition comprises the first or both of the following: a quantity of occurrence times is greater than a first threshold, and a quantity of elements comprised in a sub-sequence is greater than a second threshold.

13. The device according to any one of claims 8 to 12, wherein the address determining unit is configured to:
construct a trajectory label library based on the frequent trajectories of the plurality of users, wherein the trajectory label library comprises trajectory label data of the plurality of users, and trajectory label data of each user comprises a user identity and at least one frequent trajectory; and
determine, based on the trajectory label library and a second preset condition, the alternative address for the subject whose site is to be selected.

14. The device according to claim 13, wherein the device further comprises:
a location obtaining unit, configured to obtain location information of the user in a working time segment based on the frequent trajectory of the user;
an information obtaining unit, configured to obtain point of information POI information corresponding to the location information; and
an identity determining unit, configured to determine an identity label of the user based on the POI information, wherein the trajectory label data of the user further comprises the identity label of the user.

15. A computer storage medium, wherein the computer storage medium stores an executable instruction, and the executable instruction is used to perform the method according to any one of claims 1 to 7.

16. A site selection device, wherein the device comprises a processor and a memory, wherein
the memory stores a computer readable program; and
the processor runs the program in the memory to implement the method according to any one of claims 1 to 7.
